# EUROPEAN PATENT APPLICATION

(11) **EP 4 425 798 A1**
(43) Date of publication of application: **04.09.2024**
(21) Application number: 23159465.6
(22) Date of filing: 01.03.2023
(51) Int. Cl.: H04B 5/00, G07C 9/00

(54) **SELF SUSTAINED SYSTEM WITH NFC CHARGEABLE BATTERY**

(71) Applicant: Renesas Design Austria GmbH, 8041 Graz (AT)
(72) Inventor: Renno, David, 8041 Graz (AT); Antonetti, Francesco, 8041 Graz (AT)
(74) Representative: Schwarz & Partner Patentanwälte GmbH

(57) **Abstract**

A receiver (3) to wireless communicate data via a magnetic field (4) with a communicator (2) and to harvest energy from the magnetic field (4) in the RFID frequency area to load a battery (7) of the receiver (3), which receiver (3) comprises:
a first antenna (8) connected to a communication circuit (9) built to receive a communicator data signal from the communicator (2) via the magnetic field (4) and built to process received communicator data and built to generate receiver data and built to transmit a receiver data signal via the magnetic field (4) to the communicator (2);
a second antenna (14) connected to a wireless power circuit (15) built to harvest energy from the magnetic field (4) and to charge the battery (7) of the receiver (3), wherein that the communication circuit (9) and the wireless power circuit (15) of the receiver (3) are built to communicate data and harvest energy to charge the battery (7) in parallel and at the same time via their fixed connected first antenna (8) and second antenna (14) exposed to the same magnetic field (4).

## Description

### FIELD OF THE INVENTION

The present invention relates to a receiver to wireless communicate data via a magnetic field with a communicator and to harvest energy from the magnetic field in the RFID frequency area to load a battery of the receiver, which receiver comprises:
a first antenna connected to a communication circuit built to receive a communicator data signal from the communicator via the magnetic field and built to process received communicator data and built to generate receiver data and built to transmit a receiver data signal via the magnetic field to the communicator;
a second antenna connected to a wireless power circuit built to harvest energy from the magnetic field and to charge the battery of the receiver.

### BACKGROUND OF THE INVENTION

Companies like Orbita provide door lock systems for hotels to enable a guest to open his/her hotel room with a smart card. The passive smart card is a communicator that transmits a serial number, which is communicated via a magnetic field in the RFID frequency area generated by a receiver mounted in the door and built to activate and open the mechanical door lock, in case the serial number received is entitled to open the door. The receiver in these door lock systems is powered by a battery pack like for instance four AAA type batteries, which have to be replaced ever few months up to three years. In case the battery of the receiver is down, a technician of the hotel has to detach the receiver and replace the batteries of the battery pack, what is time consuming for the guest to enter his hotel room. There are applications where the battery of the reader in the door is realized as accumulator, which may be charged by an external power source via a cable and USB connector of the receiver, which takes up to one hour and again has to be processed by a technician of the hotel.

In other applications a mobile phone may be used instead of the smart card as communicator and, which communicator in active mode generates its own magnetic field in the RFID area. RFID standards like the Near Field Communication standard ISO 18.092 are known, that enable communication between NFC devices with a magnetic field with a carrier frequency of 13.56 MHz and define active and passive mode communications. NFC is used for door lock systems as well and the receiver in passive mode would use the magnetic field generated by the mobile phone in active NFC mode to power its communication circuit.

US 2012/0149301 A1 discloses a system of a communicator and a receiver wherein the communicator generates the magnetic field for wireless communication. The receiver comprises a communication circuit to process received communicator data and send receiver data to the communicator based on the NFC standard with a magnetic field of 13.56 MHz. The receiver furthermore comprises a wireless power circuit to harvest energy for the receiver in case a magnetic field with a frequency of 6.78 MHz is transmitted by the communicator. The receiver comprises one antenna exposed to the magnetic field of either the 13.56 MHz or 6.78 MHz and a detector of the receiver detects these different frequencies of the magnetic field and steers a switch to either connect the communication circuit or the wireless power circuit with the antenna via an appropriate matching circuit for these two different modes (circuits and frequencies).

### SUMMARY OF THE INVENTION

It is an object of the invention to provide a receiver and a system of a communicator and a receiver, which enable to reduce complexity and maintenance effort for applications like wireless door lock systems.

This object is achieved for a receiver according to claim 1 and in a system according to claim 10.

The receiver according to the invention is built with two separate antennas exposed to the same magnetic field and two complete independent reception and processing paths for wireless communication and power harvesting, that enables to harvest energy and load the battery of the receiver with every tap of a communicator, like e.g. a mobile phone, in its active mode, parallel to a communication between the receiver and the communicator. Although the time the mobile phone is held close to a door lock might be only a few seconds, this time can already be used to add a small increment of charge to the charging status of the battery, which extends the time maintenance is needed.

In a preferred embodiment the battery is realized as power cap, which is a battery technology for very fast charging of batteries with a limited and not too high charging capacity. A tap of a few seconds of the mobile phone as active communicator to open the door might provide enough time to charge the power cap up to a charging status that enables to power the servo motor to open the door lock. In this embodiment no maintenance of the battery of the door lock is needed, which is a big advantage.

In another embodiment a storage battery, like a battery pack of four AAA type batteries, is connected via a conductive diode with the battery, realized as power cap, to load the battery. As long as the battery pack is working the small capacity of the power cap is charged by the battery pack what enables to open the door with a passive communicator like a smart card. In case the voltage of the storage battery is low and a hotel guest is not able to open the door with its smart card, an active communicator like a mobile phone may be used to hold it close for a few seconds to only load the power cap to enable an emergency opening of the door until there is time to replace or charge the storage battery.

The claimed receiver and system may be used in all kind of different applications like sensor tags or health trackers or smart logistic systems or electronic shelves labels to enable a self-sustained system.

These and other aspects of the invention will be apparent from and elucidated with reference to the embodiments described hereinafter. The person skilled in the art will understand that various embodiments may be combined.

### BRIEF DESCRIPTION OF THE DRAWINGS

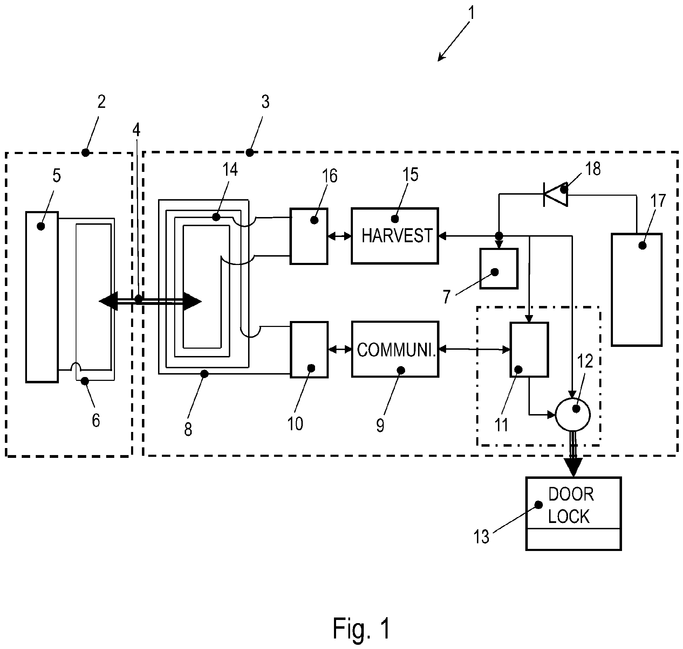

Figure 1 shows a system with a communicator and a receiver to communicate and load a battery of the receiver.

### DETAILED DESCRIPTION OF EMBODIMENTS

Figure 1 shows a system 1 as first embodiment of the invention that comprises a communicator 2 and a receiver 3 to wireless communicate data via a magnetic field 4 in the RFID frequency area. System 1 complies to the Near Field Communication standard and uses a carrier frequency of 13.56 MHz. Communicator 2 is a mobile phone with all kind of features and functionalities. One of these functionalities is the ability to communicate as NFC poller in active mode that generates the magnetic field 4 or as NFC listener in passive mode that receives the magnetic field 4 generated by another NFC device like receiver 3. To achieve that, communicator 2 comprises NFC communication stage 5 connected to a communicator antenna 6 to emit the magnetic field 4 and communicate with receiver 3.

Receiver 3 is part of a door lock of a door in a hotel, which door may be opened with communicator 2 and which receiver 3 is built to harvest energy from the magnetic field 4 generated by the communicator 2 to load a battery 7 of the receiver 3. To enable communication with the communicator 2, receiver 3 comprises a first antenna 8 connected to a communication circuit 9 built to receive a communicator data signal from the communicator 2 via the magnetic field 4 and built to process received communicator data and built to generate receiver data and built to transmit a receiver data signal via the magnetic field 4 to the communicator 2. Communication circuit 9 could be realized by integrated circuit PTX100R sold by company Panthronics AG, which realizes a NFC reader system-on-chip. Any other such integrated circuit could be used as well that realizes NFC communication functionality. A first matching circuit 10 is realized between the first antenna 8 and communication circuit 9 to match their impedances to enable a resonant communication.

If mobile phone is held close to the door lock of the hotel room for a "tap", communicator antenna 6 and first antenna 8 come into NFC communication range and communication circuit 9 may receive a number code or serial number from the mobile phone as communicator data that entitles the owner of the mobile phone to open the door of the hotel room. Receiver 3 comprises a further processing unit 11 and a servo motor 12 as activator powered by the battery 7 to open or close a mechanical door lock 13. Further processing unit 11 is built to receive open data from the communication circuit 9 and is built to activate the servo motor 12 to open the door lock 13. Further processing unit 11 furthermore is built to receive close data from the communication circuit 9 to activate the servo motor 12 to lock the door with door lock 13.

To enable harvesting of energy from the magnetic field 4 generated by communicator 2, receiver 3 comprises a second antenna 14 connected to a wireless power circuit 15 built to harvest energy from the magnetic field 4 and to charge the battery 7 of the receiver 3. A second matching circuit 16 is realized between the second antenna 14 and wireless power circuit 15 to match their impedances to enable a resonant transfer of energy in magnetic field 4. Wireless power circuit 15 could be realized by integrated circuit PTX30W sold by company Panthronics AG, which realizes a fully integrated NFC wireless charging listener chip. Any other comparable chip could be used as well that provides a functionality to generate an appropriate voltage/current to charge battery 7, which depends of the storage technology used for battery 7. A Li-Ion battery technology could be used with high power storage capacity, but in this first embodiment of the invention a power cap technology is used for battery 7, that enables fast charging even with only short charging increments of a few seconds.

Receiver 3 comprises a storage battery 17 connected via a conductive path through diode 18 with battery 7 to load battery 7. Storage battery 17 is realized in Li-Ion battery technology with a power storage capacity of storage battery 17 which is 300 times higher than the power storage capacity of battery 7. Storage battery 17 may power receiver 3 for several months or years in a normal operation mode. In state of the art door locks it is not possible at all or only very complicated possible to open the door of the hotel room when storage battery 17 is low.

To enable normal operation in this low power mode, when the storage battery 17 is down, communication circuit 9 and the wireless power circuit 15 of the receiver 3 are built to communicate data and harvest energy to charge battery 7 in parallel and at the same time via their fixed connected first antenna 8 and second antenna 14 exposed to the same magnetic field 4. This enables that wireless power circuit 15 charges battery 17 while communication circuit 9 communicates communicator data to enable to open the door. As battery 7 is realized as power cap, fast charging for only a few seconds is possible and will be enough to activate servo motor 12 to open door lock 13 for one time. As users are not willing to hold mobile phone for a long time at the door lock, only this parallel communication and energy harvesting ensures that enough power may be harvested for proper opening of the door. It is furthermore advantageous that even during the time periods when the storage battery 17 is still charged enough for normal operation, with every tap of an active communicator 2 battery 7 gets charged a bit, which helps to extend the period until the storage battery 17 is down.

Communication circuit 9 together with the first antenna 8 of receiver 3 are built to generate an own magnetic field 4 of receiver 3 in the RFID frequency area as active poller to communicate with a passive communicator 2 realized as smart card or tag. In this communication mode, wireless power circuit 15 is built to harvest energy form the own magnetic field 4 generated by the receiver 3, what reduces energy needs in active mode and extends the time until storage battery 17 is down. This may in particular be useful with antenna arrangements where the second antenna 14 is arranged in a way to load the magnetic field 4 and reduce its communication range only in areas where a user will not hold his smart card to open the door.

It is furthermore advantageous when the second antenna 14 is realized within the area of the first antenna 8, which first antenna 8 surrounds the second antenna 14 as shown in figure 1. This large area of the first antenna 8 ensures high sensitivity of the first antenna 8 and good quality of the communicator data signal and receiver data signal. In other embodiments of the invention second antenna 14 may be realized with more windings to harvest as much as possible energy from magnetic field 4. In a preferred embodiment communication circuit 9 and wireless power circuit 15 are realized together on one integrated circuit and communication circuit 9 and wireless power circuit 15 comprise automatic detuning features of the resonant antenna to avoid too much input power that could damage the integrated circuit.

There are a lot of other applications possible with a system of a communicator and a receiver with a complete separated and parallel enabled communication circuit 9 and wireless power circuit 15. Such receivers may for instance be used for sensor tags or health trackers or smart logistic systems or electronic shelves labels. The further processing unit of a sensor tag would communicate with the physical sensor and the communication circuit 9 to send such sensor data to a communicator that processes the data of several sensors. Each time the active communicator would be brought in RFID communication range the battery of sensor tag could be loaded a bit to extend its lifetime. For all these inventive applications the advantage of a self-sustained system with a battery chargeable via the RFID or NFC magnetic field is achieved.

In a further embodiment of the invention the magnetic field to enable communication between the communicator and the receiver and to enable the receiver to harvest energy from the magnetic field may be provide by another device of the system. This means that both, the receiver and the communicator are in passive mode and another device like a reader in communication range would provide in its active mode the magnetic field. For above described door lock system the passive smart card of the hotel would be the communicator and a mobile phone held close to the door lock could as reader only provide the NFC magnetic field for the door lock as receiver and the communicator.

## Claims

1. Receiver (3) to wireless communicate data via a magnetic field (4) with a communicator (2) and to harvest energy from the magnetic field (4) in the RFID frequency area to load a battery (7) of the receiver (3), which receiver (3) comprises:
a first antenna (8) connected to a communication circuit (9) built to receive a communicator data signal from the communicator (2) via the magnetic field (4) and built to process received communicator data and built to generate receiver data and built to transmit a receiver data signal via the magnetic field (4) to the communicator (2);
a second antenna (14) connected to a wireless power circuit (15) built to harvest energy from the magnetic field (4) and to charge the battery (7) of the receiver (3), **characterized in that** the communication circuit (9) and the wireless power circuit (15) of the receiver (3) are built to communicate data and harvest energy to charge the battery (7) in parallel and at the same time via their fixed connected first antenna (8) and second antenna (14) exposed to the same magnetic field (4).

2. Receiver (3) according to claim 1, wherein the receiver (3) comprises a further processing unit (11) powered by the battery (7) and built to exchange processing data with the communication circuit (9).

3. Receiver (3) according to claim 2, wherein the further processing unit (11) comprises an activator (12) powered by the battery (7) to open or close a door lock and wherein the further processing unit (11) is built to receive open data from the communication circuit (9) and is built to activate the activator (13) to open the door lock (13) and/or wherein the further processing unit (11) is built to receive close data from the communication circuit (9) and is built to activate the activator (12) to close the door lock (13).

4. Receiver (3) according to claim 3, wherein the battery (7) is realized as power cap or capacity to enable fast charging.

5. Receiver (3) according to any of the claims 1 to 4, wherein the receiver (3) comprises a storage battery (17) connected via a conductive diode (18) with the battery (7) to load the battery (7).

6. Receiver (3) according to claim 5, wherein the power storage capacity of the storage battery (17) is at least ten times higher than the power storage capacity of the battery (7).

7. Receiver (3) according to any of the claims 1 to 6, wherein the communication circuit (9) together with the first antenna (8) is built to generate its own magnetic field (4) in the RFID frequency area to communicate with a passive communicator and wherein the wireless power circuit (15) is built to harvest energy form the own magnetic field generated by the receiver (3).

8. Receiver (3) according to any of the claims 1 to 7, wherein the second antenna (14) is realized within the area of the first antenna (8), which first antenna (8) surrounds the second antenna (14).

9. Receiver (3) according to any of the claims 1 to 8, wherein the communication circuit (9) and the wireless power circuit (15) are realized on the same integrated circuit.

10. System (1) that comprises a communicator (2) and a receiver (3) to wireless communicate data via a magnetic field (4) and to harvest energy in the receiver (3) from the magnetic field (4) in the RFID frequency area to load a battery (7) of the receiver (3), which receiver (3) is built according to one of the claims 1 to 9.

11. System (1) according to claim 10, wherein the communicator (2) is built to generate the magnetic field (4) in the RFID frequency area.

12. System (1) according to claim 10, wherein the communication circuit (9) of the receiver (3) is built to generate its own magnetic field (4) in the RFID frequency area to communicate with a passive communicator and wherein the wireless power circuit (15) is built to harvest energy form the own magnetic field (4) generated by the receiver (3).
